# EUROPEAN PATENT SPECIFICATION

(11) **EP 2 147 722 B1**
(45) Date of publication and mention of the grant of the patent: **12.11.2014**
(21) Application number: 08022347.2
(22) Date of filing: 23.12.2008
(51) Int. Cl.: B01J 35/04, B01J 29/00, B01D 53/92, F01N 3/00, C04B 38/00, F01N 3/28, B01D 46/24, F01N 3/20

(54) **Honeycomb structure**
Wabenstruktur
Structure en nid d'abeille

(30) Priority: 20.05.2008 WO PCT/JP2008/059284
(43) Date of publication of application: 27.01.2010
(73) Proprietor: Ibiden Co., Ltd., Ogaki-shi, Gifu 503-8604 (JP)
(72) Inventor: Ohno, Kazushige, Ibi-gun Gifu 501-0695 (JP); Kunieda, Masafumi, Ibi-gun Gifu 501-0695 (JP); Ido, Takahiko, Ibi-gun Gifu 501-0695 (JP)
(74) Representative: Hoffmann Eitle

(56) References cited:
- EP-A- 1 440 722
- US-A1- 2006 292 335
- US-A1- 2007 259 770

## Description

### BACKGROUND OF THE INVENTION

### 1. Field of the Invention

The present invention relates to a honeycomb structure.

### 2. Description of the Related Art

Conventionally, an SCR (Selective Catalytic Reduction) system for reducing NOx to nitrogen and water using ammonia has been known as a system for converting exhaust gas of automobiles (see below).

4NO + 4NH₃ + O₂ → 4N₂ + 6H₂O

6NO₂ + 8NH₃ → 7N₂ + 12H₂O

NO + NO₂ + 2NH₃ → 2N₂ + 3H₂O

Zeolite has been known as a material for absorbing ammonia in the SCR system. Note that, generally, in the case where the SCR system is used as an exhaust gas treating device, a DOC (Diesel Oxidation Catalyst) is disposed upstream the SCR system in a direction of exhaust gas flow in order to oxidize HC (hydrocarbons).

PCT International Publication No. WO/06/137149 discloses a honeycomb structure, wherein honeycomb units include inorganic particles, and inorganic fibers and/or whiskers.

The inorganic particles include at least one of alumina, silica, zirconia, titania, ceria, mullite, and zeolite.

However, if the honeycomb structure including zeolite is used in the SCR system, since HC that has not been oxidized by the DOC is adsorbed onto zeolite, ignition of HC desorbed at high temperature causes thermal shock fracture.

### SUMMARY OF THE INVENTION

In view of the forgoing, the present invention is directed toward providing a honeycomb structure capable of preventing fracture due to thermal shock.

According to an aspect of the present invention, a honeycomb structure includes a honeycomb unit including zeolite and an inorganic binder non-zeolite inorganic particles and inorganic fibers, and having partition walls extending along a longitudinal direction of the honeycomb unit to define plural through holes. The honeycomb unit has thermal conductivity equal to or greater than 0.15 W/m/K but less than or equal to 0.60 W/m/K and has Young's modulus equal to or greater than 1.5 GPa but less than or equal to 7.0 GPa which is measured according to the JIS R 1605 standard.

In the above-described honeycomb unit, the content of the zeolite per apparent volume may preferably be equal to or greater than 230 g/L but less than or equal to 270 g/L. The apparent volume of the honeycomb unit as used herein indicates the volume including the through holes.

The above-described zeolite may preferably include at least one of β zeolite, Y zeolite, ferrierite, ZSM-5 zeolite, mordenite, faujasite, zeolite A, and zeolite L.

The above-described zeolite may preferably have a molar ratio of silica to alumina equal to or greater than 30 but less than or equal to 50.

The above-described zeolite may preferably be ion exchanged with at least one of Fe, Cu, Ni, Co, Zn, Mn, Ti, Ag and V.

The above-described zeolite may preferably further include secondary particles of particle diameter equal to or greater than 0.5 µm but less than or equal to 10 µm.

The inorganic particles may include at least one of alumina, silica, titania, zirconia, ceria, mullite, and precursors thereof.

The above-described inorganic binder may preferably include solid content contained in at least one of alumina sol, silica sol, titanium sol, liquid glass, sepiolite, and attapulgite.

The inorganic fibers may include at least one of alumina, silica, silicon carbide, silica alumina, glass, potassium titanate, and aluminum borate.

In the above-described honeycomb unit, the aperture ratio in the cross section perpendicular to the longitudinal direction may preferably be equal to or greater than 50% but less than or equal to 65%.

In the above-described honeycomb structure, plural of the above-described honeycomb units may preferably be bonded to each other by interposing adhesive layers between the plural honeycomb units.

According to an aspect of the present invention, it is possible to provide a honeycomb structure capable of preventing fracture due to thermal shock.

### BRIEF DESCRIPTION OF THE DRAWINGS

FIG. 1 is a perspective view illustrating an example of a honeycomb structure according to an embodiment of the present invention;
FIG. 2A is a perspective view illustrating another honeycomb structure according to an embodiment of the present invention; and
FIG. 2B is a perspective view illustrating a honeycomb unit of the honeycomb structure of FIG. 2A.

### DETAILED DESCRIPTION OF THE PREFERRED EMBODIMENT

Preferred embodiments of the present invention are described below with reference to the accompanying drawings.

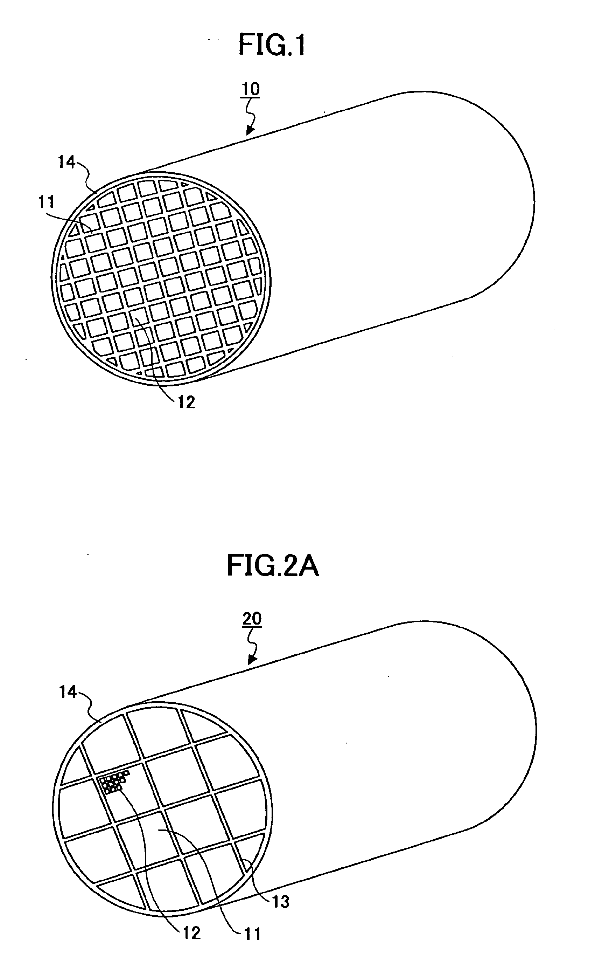

FIG. 1 shows a honeycomb structure 10 according to an embodiment of the present invention. The honeycomb structure 10 includes a single honeycomb unit 11 including zeolite and inorganic binder and having plural through holes 12 that are aligned in the longitudinal direction and are separated from each other by partition walls. A peripheral coating layer 14 is formed on the peripheral surface of the honeycomb unit 11. The thermal conductivity of the honeycomb unit 11 is in the range 0.15 - 0.60 W/m/K, and preferably in the range 0.20 - 0.40 W/m/K. The Young's modulus of the honeycomb unit 11 is in the range 1.5 - 7.0 GPa, and preferably in the range 3.0 - 5.6 GPa. With this configuration, the honeycomb structure 10 can prevent fracture due to thermal shock, and can be applied to an exhaust gas treating device in which a DOC is disposed upstream an SCR system (e.g., a urea SCR system) in a direction of exhaust gas flow.

If the thermal conductivity of the honeycomb unit 11 is less than 0.15 W/m/K, a temperature gradient is produced within the honeycomb unit 11, so that the honeycomb unit 11 becomes more likely to fracture due to thermal stress. On the other hand, if the thermal conductivity of the honeycomb unit 11 is greater than 0.60 W/m/K, the porosity inside the honeycomb unit 11 is reduced and hence the Young's modulus is increased, so that the honeycomb unit 11 becomes more likely to fracture. If the Young's modulus of the honeycomb structure 11 is less than 1.5 GPa, the honeycomb unit 11 is likely to have insufficient strength. On the other hand, if the Young's modulus is greater than 7.0 GPa, the honeycomb unit 11 becomes more likely to fracture.

The content of zeolite per apparent volume in the honeycomb unit 11 is preferably in the range 230 - 270 g/L. If the content of zeolite per apparent volume in the honeycomb unit 11 is less than 230 g/L, the apparent volume of the honeycomb unit 11 may need to be increased in order to achieve sufficient NOx conversion efficiency. On the other hand, if the content of zeolite per apparent volume is greater than 270 g/L, the honeycomb unit 11 may have insufficient strength.

Non-exclusive examples of zeolite may include β zeolite, ZSM-5 zeolite, mordenite, faujasite, zeolite A, and zeolite L. These may be used alone or in combination of two or more.

Zeolite may preferably have a molar ratio of silica to alumina in the range 30 - 50.

Zeolite may be ion exchanged in order to improve the ammonia absorption capacity. Non-exclusive examples of cationic species with which zeolite is ion exchanged may include Fe, Cu, Ni, Co, Zn, Mn, Ti, Ag, and V. These may be used alone or in combination of two or more. The ion exchange amount is preferably in the range 1.0 - 10.0 wt%, and more preferably in the range 1.0 - 5.0 wt%. If the ion exchange amount is less than 1.0 wt%, the ammonia absorption capacity is not sufficiently improved by ion exchange. On the other hand, if the ion exchange amount is greater than 10.0 wt%, the structure may become instable when heat is applied. For ion exchange of zeolite, zeolite may be immersed in a solution containing cations.

Zeolite may preferably contain secondary particles. The average particle diameter of the secondary particles of zeolite is preferably in the range 0.5 - 10 µm. If the average particle diameter of the secondary particles of zeolite is less than 0.5 µm, a large amount of inorganic binder needs to be added, which may make extrusion molding difficult. On the other hand, if the average particle diameter is greater than 10 µm, the specific surface area of zeolite is reduced, which may result in reduced NOx conversion efficiency.

In order to improve the strength, the honeycomb unit 11 includes inorganic particles excluding zeolite (hereinafter referred to as "non-zeolite inorganic particles"). Non-exclusive examples of non-zeolite inorganic particles may include alumina, silica, titania, zirconia, ceria, mullite, and precursors of these materials. These may be used alone or in combination of two or more. Alumina and zirconia are preferable among them.

The average particle diameter of the non-zeolite inorganic particles is preferably in the range 0.5 - 10 µm. If the average particle diameter is less than 0.5 µm, a large amount of inorganic binder needs to be added, which may make extrusion molding difficult. On the other hand, if the average particle diameter is greater than 10 µm, a sufficient effect of increasing the strength of the honeycomb unit 11 may not be obtained. The non-zeolite inorganic particles may contain secondary particles.

The ratio of the average diameter of the secondary particles of the non-zeolite inorganic particles to the average diameter of the secondary particles of zeolite is preferably 1 or less, and more preferably in the range 0.1 - 1. If this ratio is greater than 1, a sufficient effect of increasing the strength of the honeycomb unit 11 may not be obtained.

The content of the non-zeolite inorganic particles in the honeycomb unit 11 is preferably in the range 3 - 30 wt%, and more preferably in the range 5 - 20 wt%. If the content is less than 3 wt%, a sufficient effect of increasing the strength of the honeycomb unit 11 may not be obtained. On the other hand, if the content is greater than 30 wt%, the content of zeolite in the honeycomb unit 11 is reduced, which may result in reduced NOx conversion efficiency.

Non-exclusive examples of an inorganic binder include solid content contained in alumina sol, silica sol, titanium sol, liquid glass, sepiolite, and attapulgite. These may be used alone or in combination of two of more.

The content of the inorganic binder in the honeycomb unit 11 is preferably in the range 5 - 30 wt%, and more preferably in the range 10 - 20 wt%. The inorganic binder content of less than 5 wt% may result in reduced strength of the honeycomb unit 11, while the inorganic binder content of greater than 30 wt% may make molding difficult.

The honeycomb unit 11 includes inorganic fibers for increased strength.

The inorganic fibers may be any kind of inorganic fiber that can increase the strength of the honeycomb unit 11. Non-exclusive examples of inorganic fibers may include alumina, silica, silicon carbide, silica alumina, glass, potassium titanate, and aluminum borate. These may be used alone or in combination of two or more.

The aspect ratio of the inorganic fibers is preferably in the range 2 - 1,000, more preferably in the range 5 - 800, and still more preferably in the range 10 - 500. If the aspect ratio is less than 2, the effect of increasing the strength of the honeycomb unit 11 may be reduced. On the other hand, if the aspect ratio is greater than 1,000, clogging or the like may occur in a mold during molding using an extrusion molding process or the like. Further, inorganic fibers may be broken during the molding process, so that the effect of increasing the strength of the honeycomb unit 11 may be reduced.

The content of the inorganic fibers in the honeycomb unit 11 is preferably in the range 3 - 50 wt%, more preferably in the range 3 - 30 wt%, and still more preferably in the range 5 - 20 wt%. If the content of the inorganic fibers is less than 3 wt%, the effect of increasing the strength of the honeycomb unit 11 may be reduced. On the other hand, if the content is greater than 50 wt%, the content of zeolite in the honeycomb unit 11 is reduced, which may result in reduced NOx conversion efficiency.

In the honeycomb unit 11, the aperture ratio in the cross section perpendicular to the longitudinal direction is preferably in the range 50 - 65%. The aperture ratio of less than 50% may result in inefficient use of zeolite in NOx conversion, while the aperture ratio of greater than 65% may result in insufficient strength of the honeycomb structure 10.

In the honeycomb unit 11, the density of the through holes 12 in the cross section perpendicular to the longitudinal direction is preferably in the range 15.5 - 124 holes/cm², and more preferably in the range 31 - 93 holes/cm². If the density of the through holes 12 is less than 15.5 holes/cm², it is difficult to bring exhaust gas and zeolite into contact with each other, so that the NOx conversion efficiency of the honeycomb unit 11 may be reduced. On the other hand, if the density of the through holes 12 is greater than 93 holes/cm², pressure loss of the honeycomb unit 11 may be increased.

The thickness of the partition walls between the through holes 12 of the honeycomb unit 11 is preferably in the range 0.10 - 0.50 mm, and more preferably in the range 0.15 - 0.35 mm. If the partition wall thickness is less than 0.10 mm, the strength of the honeycomb unit 11 may be reduced. On the other hand, if the partition wall thickness is greater than 0.50 mm, it is difficult for exhaust gas to penetrate into the partition walls, which may result in inefficient use of zeolite in NOx conversion.

The thickness of the peripheral coating layer 14 is preferably in the range 0.1 - 2 mm. If the thickness of the peripheral coating layer 14 is less than 0.1 mm, a sufficient effect of increasing the strength of the honeycomb unit 11 may not be obtained. On the other hand, if the thickness of the peripheral coating layer 14 is greater than 2 mm, the content of zeolite per unit volume in the honeycomb structure 10 is reduced, so that the NOx conversion efficiency of the honeycomb structure 10 may be reduced.

Although the honeycomb structure 10 of the illustrated embodiment of the present invention has a cylindrical shape, the honeycomb structure 10 may have any shape such as a rectangular pillar shape and a cylindroid shape.

Although the through holes 12 of the illustrated embodiment of the present invention have a rectangular pillar shape, the through holes 12 may have any shape such as a triangular pillar shape and a hexagonal pillar shape.

An example of a manufacturing method of the honeycomb structure 10 is described below. First, a raw material paste, which contains zeolite and inorganic binder and, if necessary, further contains non-zeolite inorganic particles and inorganic fibers, is molded using an extrusion molding process or the like to form a raw cylindrical honeycomb molded body having plural through holes that are aligned in the longitudinal direction and are separated from each other by partition walls. Thus, a cylindrical honeycomb unit 11 having sufficient strength can be obtained even if fired at low temperatures.

Examples of an inorganic binder contained in the raw material paste may include alumina sol, silica sol, titanium sol, liquid glass, sepiolite, and attapulgite. These may be used alone or in combination of two of more.

An organic binder, a pore-forming agent, a dispersion solvent, a molding assisting agent, and the like may be added to the raw material paste if necessary.

Non-exclusive examples of a pore-forming agent may include balloons, which are hollow microspheres of oxide ceramic, spherical acrylic particles, and graphite. These may be used alone or in combination of two or more. Examples of balloons may include alumina balloons, glass micro-balloons, shirasu balloons, fly ash balloons (FA balloons), and mullite balloons.

Non-exclusive examples of an organic binder may include methylcellulose, carboxymethylcellulose, hydroxyethylcellulose, polyethyleneglycol, phenol resin, and epoxy resin. These may be used alone or in combination of two or more. The content of the organic binder is preferably in the range 1 - 10% of the total weight of zeolite, the non-zeolite inorganic particles, the inorganic fibers, and the inorganic binder.

In an embodiment of the present invention, the Young's modulus of the honeycomb unit 11 may be adjusted using the organic binder and the pore-forming agent.

Non-exclusive examples of a dispersion solvent may include organic solvent, such as water and benzene, and alcohol, such as methanol. These may be used alone or in combination of two or more.

Non-exclusive examples of a molding assisting agent may include ethylene glycol, dextrin, fatty acid, fatty acid soap, and polyalcohol. These may be used alone or in combination of two or more.

When preparing the raw material paste, the components of the raw material paste are preferably mixed and kneaded. These components may be mixed using a mixer, an attritor or the like, and be kneaded using a kneader or the like.

The resulting honeycomb molded body is dried using a drying apparatus such as a microwave drying apparatus, a hot air drying apparatus, a dielectric drying apparatus, a low-pressure drying apparatus, a vacuum drying apparatus, and a freezing drying apparatus.

Then, the resulting honeycomb molded body is degreased. Although degreasing conditions may be suitably selected according to the kind and amount of organic substances contained in the molded body, degreasing is preferably performed at 400 °C for 2 hours.

Then, the resulting honeycomb molded body is fired to obtain a cylindrical honeycomb unit 11. The firing temperature is preferably in the range 600 - 1,200 °C, and more preferably in the range 600 - 1,000 °C. The firing temperature of less than 600 °C makes progress of firing difficult and may result in reduced strength of the honeycomb structure 10. The firing temperature of greater than 1,200 °C causes excessive progress of firing and may result in reduced reaction sites of zeolite.

Then, a peripheral coating paste is applied onto the peripheral surface of the cylindrical honeycomb unit 11. Non-exclusive examples of a peripheral coating paste may include a mixture of an inorganic binder and inorganic particles, a mixture of an inorganic binder and inorganic fibers, and a mixture of an inorganic binder, inorganic particles, and inorganic fibers.

The peripheral coating paste may contain an organic binder. Non-exclusive examples of an organic binder may include polyvinyl alcohol, methylcellulose, ethylcellulose, and carboxymethylcellulose. These may be used alone or in combination of two or more.

The honeycomb unit 11 with the peripheral coating paste applied thereon is dried and solidified to obtain a cylindrical honeycomb structure 10. In the case where the peripheral coating paste contains an organic binder, degreasing is preferably performed. Although degreasing conditions may be suitably selected according to the kind and amount of organic substances, degreasing is preferably performed at 700 °C for 20 minutes.

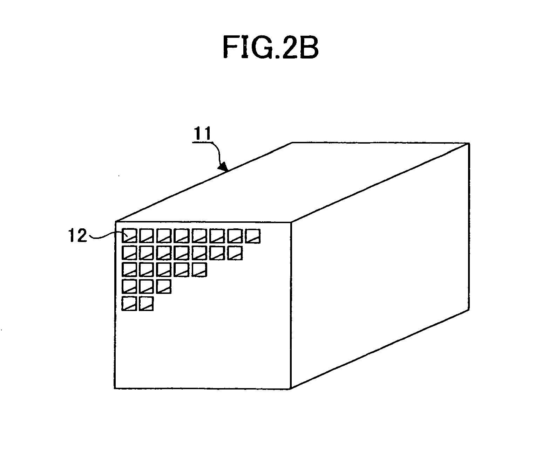

FIGS. 2A and 2B show another honeycomb structure 20 according to an embodiment of the present invention. The honeycomb structure 20 is the same as the honeycomb structure 10 except that plural honeycomb units 11, each having plural through holes 12 that are aligned in the longitudinal direction and are separated from each other by partition walls, are bonded to each other by interposing adhesive layers 13.

The area of the cross section of the honeycomb unit 11 perpendicular to the longitudinal direction is preferably in the range 5 - 50 cm². A cross-sectional area of less than 5 cm² may result in reduced specific surface area of the honeycomb structure 10 and increased pressure loss, while a cross-sectional area of greater than 50 cm² may result in insufficient strength against thermal stress in the honeycomb unit 11.

The thickness of the adhesive layers 13 bonding the honeycomb units 11 to each other is preferably in the range 0.5 - 2 mm. The adhesive layers 13 having thickness of less than 0.5 mm may result in insufficient adhesive strength. On the other hand, the adhesive layers 13 having thickness of greater than 2 mm may result in reduced specific surface area of the honeycomb structure 10 and increased pressure loss.

Although the honeycomb unit 11 of the illustrated embodiment of the present invention has a square pillar shape, the honeycomb unit 11 may have any shape, preferably shapes such as a hexagonal pillar shape that allow easy bonding of the honeycomb units 11.

An example of a manufacturing method of the honeycomb structure 20 is described below. Square-pillar-shaped honeycomb units 11 are manufactured in the same manner as the honeycomb structure 10. Then, an adhesive paste is applied onto the peripheral surfaces of the honeycomb units 11 to bond the honeycomb units 11 to each other. The adhesive paste is dried and solidified to form an assembly of the honeycomb units 11. After forming the assembly of the honeycomb units 11, the assembly may be cut into a cylindrical shape and be polished. Alternatively, honeycomb units 11 molded in sector shapes or square shapes in cross section may be bonded to each other to form a cylindrical assembly of the honeycomb units 11.

Non-exclusive examples of an adhesive paste may include a mixture of an inorganic binder and inorganic particles, a mixture of an inorganic binder and inorganic fibers, and a mixture of an inorganic binder, inorganic particles, and inorganic fibers.

The adhesive paste may contain an organic binder. Non-exclusive examples of an organic binder may include polyvinyl alcohol, methylcellulose, ethylcellulose, and carboxymethylcellulose. These may be used alone or in combination of two or more.

Then, a peripheral coating paste is applied onto the peripheral surface of the cylindrical assembly of the honeycomb units 11. The peripheral coating paste may contain the same materials as the materials of the adhesive paste or may contain different materials. The peripheral coating paste may have the same composition as the composition of the adhesive paste.

The assembly of the honeycomb units 11 with the peripheral coating paste applied thereon is dried and solidified to obtain a cylindrical honeycomb structure 20. In the case where the adhesive paste and/or the peripheral coating paste contains an organic binder, degreasing is preferably performed. Although degreasing conditions may be suitably selected according to the kind and amount of organic substances, degreasing is preferably performed at 700 °C for 20 minutes.

Note that the honeycomb structures 10 and 20 may be manufactured in the following way. A honeycomb structure is formed using a raw material paste containing non-ion exchanged zeolite and then is immersed in a solution containing cations for ion exchange of zeolite.

In an embodiment of the present invention, a honeycomb structure may or may not have a peripheral coating layer.

### (Examples)

### <Example 1>

First, 2,250 g of β zeolite having 3 wt% ion exchanged with Fe, 2 µm average particle diameter, a silica/alumina ratio of 40, and 110 m²/g specific surface area; 2,600 g of alumina sol of 20 wt% solid content as a component containing an inorganic binder; 550 g of γ alumina of 2 µm average particle diameter as inorganic particles; 780 g of alumina fibers of 1 µm average fiber diameter and 25 µm average fiber length as inorganic fibers; and 410 g of methylcellulose as an organic binder were mixed and kneaded to obtain a raw material paste 1. Note that zeolite particles were immersed in an iron nitrate solution to be ion exchanged with Fe. The ion exchange amount of zeolite was measured by IPC emission analysis using ICPS-8100 (manufactured by Shimadzu Corporation). Then, the raw material paste 1 was molded by extrusion molding using an extruder to obtain a raw cylindrical honeycomb molded body. The honeycomb molded body was dried using a microwave drying apparatus and a hot air drying apparatus, and was then degreased at 400 °C for 5 hours. Then, the honeycomb molded body was dried at 600 °C for 5 hours to obtain a cylindrical honeycomb unit 11 of 143 mm diameter and 150 mm length. The obtained honeycomb unit 11 has a 60% aperture ratio in the cross section perpendicular to the longitudinal direction, a through hole density of 78 through holes/cm², 0.25 mm partition wall thickness, and 250g/L zeolite content per apparent volume.

The aperture ratio was found by calculating the area of the through holes in an area of 10 cm by 10 cm of the honeycomb structure using an optical microscope. The density of the through holes was found by counting the number of the through holes in an area of 10 cm by 10 cm of the honeycomb structure using an optical microscope. The partition wall thickness is an average value of the partition wall thicknesses at several locations (five locations) measured using an optical microscope.

The honeycomb unit 11 has a thermal conductivity of 0.16 W/m/K and a Young's modulus of 7.0 GPa (see Table 1).

The thermal conductivity was measured at 600 °C using LF/TCM-FA8510B (manufactured by Rigaku Corporation). The Young's modulus was measured at 600 °C using a JE-RT type modulus measuring device (manufactured by Nihon Technoplus Co. Ltd.) according to the JIS R 1605 standard. Here, a sample of 10 mm × 10 mm × 30 mm cut from the honeycomb unit 11 was used.

Next, 29 parts by weight of γ alumina of 2 µm average particle diameter as inorganic particles, 7 parts by weight of alumina fibers of 6 µm average fiber diameter and 100 µm average fiber length as inorganic fibers, 34 parts by weight of alumina sol of 20 wt% solid content as a component containing an inorganic binder, 5 parts by weight of methylcellulose as an organic binder, and 25 parts by weight of water were mixed and kneaded to obtain a peripheral coating paste.

Then, the peripheral coating paste was applied onto the peripheral surface of the honeycomb unit 11 to form a peripheral coating layer 14 of 0.4 mm thickness. After that, the honeycomb unit 11 was dried and solidified at 120 °C by using a microwave drying apparatus and a hot air drying apparatus, and was then degreased at 400 °C for 2 hours to obtain a cylindrical honeycomb structure 10 of 143.8 mm diameter and 150 mm length.

### <Example 2>

In this example, 2,250 g of β zeolite having 3 wt% ion exchanged with Fe, 2 µm average particle diameter, a silica/alumina ratio of 40, and 110 m²/g specific surface area; 2,600 g of alumina sol of 20 wt% solid content; 410 g of γ alumina of 2 µm average particle diameter; 120 g of acrylic resin of 10 µm average particle diameter as a pore-forming agent; 780 g of alumina fibers of 1 µm average fiber diameter and 25 µm average fiber length; and 410 g of methylcellulose were mixed and kneaded to obtain a raw material paste 2.

A honeycomb structure 10 was manufactured in the same manner as in Example 1 except that the raw material paste 2 was used instead of the raw material paste 1 (see Table 1).

### <Example 3>

In this example, 2,250 g of β zeolite having 3 wt% ion exchanged with Fe, µm average particle diameter, a silica/alumina ratio of 40, and 110 m²/g specific surface area; 2,600 g of alumina sol of 20 wt% solid content; 190 g of γ alumina of 2 µm average particle diameter; 300 g of acrylic resin of 10 µm average particle diameter as a pore-forming agent; 780 g of alumina fibers of 1 µm average fiber diameter and 25 µm average fiber length; and 410 g of methylcellulose were mixed and kneaded to obtain a raw material paste 3.

A honeycomb structure 10 was manufactured in the same manner as in Example 1 except that the raw material paste 3 was used instead of the raw material paste 1 (see Table 1).

### <Example 4>

A honeycomb structure 10 was manufactured in the same manner as in Example 1 except that the firing temperature was 1,000 °C instead of 600 °C (see Table 1).

### <Example 5>

A raw material paste 4 was obtained in the same manner as in Example 4 except that aluminum borate fibers of 1 µm average fiber diameter and 25 µm average fiber length were used instead of alumina fibers of 1 µm average fiber diameter and 25 µm average fiber length.

A honeycomb structure 10 was manufactured in the same manner as in Example 4 except that the raw material paste 4 was used instead of the raw material paste 1 (see Table 1).

### <Example 6> (Reference)

In this example, 2,250 g of β zeolite having 3 wt% ion exchanged with Fe, 2 µm average particle diameter, a silica/alumina ratio of 40, and 110 m²/g specific surface area; 2,600 g of alumina sol of 20 wt% solid content; 600 g of acrylic resin of 10 µm average particle diameter as a pore-forming agent; 650 g of alumina fibers of 1 µm average fiber diameter and 25 µm average fiber length; and 410 g of methylcellulose were mixed and kneaded to obtain a raw material paste 5.

A honeycomb structure 10 was manufactured in the same manner as in Example 4 except that the raw material paste 5 was used instead of the raw material paste 1 (see Table 1).

### <Example 7>

A raw material paste 6 was obtained in the same manner as in Example 2 except that silicon carbide fibers of 1 µm average fiber diameter and 25 µm average fiber length were used instead of alumina fibers of 1 µm average fiber diameter and 25 µm average fiber length.

A honeycomb structure 10 was manufactured in the same manner as in Example 1 except that the raw material paste 6 was used instead of the raw material paste 1 (see Table 1).

### <Example 8>

A raw material paste 7 was obtained in the same manner as in Example 3 except that silicon carbide fibers of 1 µm average fiber diameter and 25 µm average fiber length were used instead of alumina fibers of 1 µm average fiber diameter and 25 µm average fiber length.

A honeycomb structure 10 was manufactured in the same manner as in Example 1 except that the raw material paste 7 was used instead of the raw material paste 1 (see Table 1).

### <Example 9> (Reference)

A raw material paste 8 was obtained in the same manner as in Example 6 except that silicon carbide fibers of 1 µm average fiber diameter and 25 µm average fiber length were used instead of alumina fibers of 1 µm average fiber diameter and 25 µm average fiber length.

A honeycomb structure 10 was manufactured in the same manner as in Example 1 except that the raw material paste 8 was used instead of the raw material paste 1 (see Table 1).

### <Comparative Example 1>

A honeycomb structure 10 was manufactured in the same manner as in Example 7 except that the firing temperature was 800 °C instead of 600 °C (see Table 1).

### <Comparative Example 2>

A honeycomb structure 10 was manufactured in the same manner as in Example 9 except that the firing temperature was 800 °C instead of 600 °C (see Table 1).

### <Comparative Example 3>

A raw material paste 9 was obtained in the same manner as in Example 1 except that silica-alumina fibers of 1 µm average fiber diameter and 25 µm average fiber length were used instead of alumina fibers of 1 µm average fiber diameter and 25 µm average fiber length.

A honeycomb structure 10 was manufactured in the same manner as in Example 1 except that the raw material paste 9 was used instead of the raw material paste 1 (see Table 1).

### <Comparative Example 4>

A raw material paste 10 was obtained in the same manner as in Example 3 except that silica-alumina fibers of 1 µm average fiber diameter and 25 µm average fiber length were used instead of alumina fibers of 1 µm average fiber diameter and 25 µm average fiber length.

A honeycomb structure 10 was manufactured in the same manner as in Example 1 except that the raw material paste 10 was used instead of the raw material paste 1 (see Table 1).

### <Comparative Example 5>

In this example, 2,250 g of β zeolite having 3 wt% ion exchanged with Fe, 2 µm average particle diameter, a silica/alumina ratio of 40, and 110 m²/g specific surface area; 2,600 g of alumina sol of 20 wt% solid content; 675 g of γ alumina of 2 µm average particle diameter; 700 g of alumina fibers of 1 µm average fiber diameter and 25 µm average fiber length; and 410 g of methylcellulose were mixed and kneaded to obtain a raw material paste 11.

A honeycomb structure 10 was manufactured in the same manner as in Example 1 except that the raw material paste 11 was used instead of the raw material paste 1 (see Table 1).

### <Comparative Example 6>

A raw material paste 12 was obtained in the same manner as in Example 9 except that alumina fibers of 1 µm average fiber diameter and 25 µm average fiber length were used instead of silicon carbide fibers of 1 µm average fiber diameter and 25 µm average fiber length.

A honeycomb structure 10 was manufactured in the same manner as in Comparative Example 1 except that the raw material paste 12 was used instead of the raw material paste 1 (see Table 1).

### <Comparative Example 7>

A honeycomb structure 10 was manufactured in the same manner as in Example 4 except that the raw material paste 11 was used instead of the raw material paste 1 (see Table 1).

### <Comparative Example 8>

A raw material paste 13 was obtained in the same manner as in Example 9 except that aluminum borate fibers of 1 µm average fiber diameter and 25 µm average fiber length were used instead of silicon carbide fibers of 1 µm average fiber diameter and 25 µm average fiber length.

A honeycomb structure 10 was manufactured in the same manner as in Example 4 except that the raw material paste 13 was used instead of the raw material paste 1 (see Table 1).

### <Comparative Example 9>

A raw material paste 14 was obtained in the same manner as in Example 1 except that silicon carbide fibers of 1 µm average fiber diameter and 25 µm average fiber length were used instead of alumina fibers of 1 µm average fiber diameter and 25 µm average fiber length.

A honeycomb structure 10 was manufactured in the same manner as in Example 1 except that the raw material paste 14 was used instead of the raw material paste 1 (see Table 1).

**Table 1**

| | RAW MATERIAL PASTE | FIRING TEMPERATURE [°C] | THERMAL CONDUCTIVITY [W/m/K] | YOUNG' S MODULUS [MPa] | THERMAL SHOCK TEST |
|---|---|---|---|---|---|
| EXAMPLE 1 | 1 | 600 | 0.16 | 7.0 | Good |
| EXAMPLE 2 | 2 | 600 | 0.16 | 5.0 | Good |
| EXAMPLE 3 | 3 | 600 | 0.16 | 2.3 | Good |
| EXAMPLE 4 | 1 | 1000 | 0.35 | 6.5 | Good |
| EXAMPLE 5 | 4 | 1000 | 0.37 | 4.5 | Good |
| *EXAMPLE 6 | 5 | 1000 | 0.35 | 2.3 | Good |
| EXAMPLE 7 | 6 | 600 | 0.60 | 5.7 | Good |
| EXAMPLE 8 | 7 | 600 | 0.60 | 4.3 | Good |
| *EXAMPLE 9 | 8 | 600 | 0.60 | 2.8 | Good |
| COMPARATIVE EXAMPLE 1 | 6 | 800 | 0.70 | 5.7 | Bad |
| COMPARATIVE EXAMPLE 2 | 8 | 800 | 0.70 | 2.8 | Bad |
| COMPARATIVE EXAMPLE 3 | 9 | 600 | 0.12 | 5.4 | Bad |
| COMPARATIVE EXAMPLE 4 | 10 | 600 | 0.12 | 3.0 | Bad |
| COMPARATIVE EXAMPLE 5 | 11 | 600 | 0.16 | 7.2 | Bad |
| COMPARATIVE EXAMPLE 6 | 12 | 600 | 0.20 | 10 | Bad |
| COMPARATIVE EXAMPLE 7 | 11 | 1000 | 0.35 | 7.2 | Bad |
| COMPARATIVE EXAMPLE 8 | 13 | 1000 | 0.37 | 1.8 | Bad |
| COMPARATIVE EXAMPLE 9 | 14 | 600 | 0.60 | 71 | Bad |

| | | | | | |
|---|---|---|---|---|---|
| * EXAMPLE 6 and EXAMPLE 9 are reference examples. | | | | | |

### <Thermal Shock Test>

An alumina mat of 6 mm thickness (46.5 cm × 15 cm) (manufactured by Mitsubishi Chemical Corporation) was wound on the peripheral surface of each of the honeycomb structures of Examples 1 - 9 and Comparative Examples 1 - 9. The honeycomb structure was placed and pushed into a metal casing using Instron and thus was canned.

The canned honeycomb structure was placed in a firing furnace at 600 °C and was heated for 10 minutes. Then, the honeycomb structure was removed from the firing furnace and was cooled naturally to room temperature. This process was repeated ten times. Then, it was visually determined whether there was a crack. The results are shown in the above Table 1. In Table 1, "Good" indicates that there was no crack and "Bad" indicates that there was a crack. Table 1 suggests that the honeycomb structures of Examples 1 - 9 have less risk of developing cracks due to thermal shock than the honeycomb structures of Comparative Examples 1 - 9.

These results show that if the honeycomb unit 11 has thermal conductivity in the range 0.15 - 0.60 W/m/K and Young's modulus in the range 1.5 - 7.0 GPa, it is possible to prevent fracture of the honeycomb structure 10 due to thermal shock.

## Claims

1. A honeycomb structure comprising:
a honeycomb unit having thermal conductivity equal to or greater than 0.15 W/m/K but less than or equal to 0.60 W/m/K and having Young's modulus equal to or greater than 1.5 GPa but less than or equal to 7.0 GPa which is measured according to the JIS R 1605 standard, the honeycomb unit comprising zeolite, an inorganic binder, non-zeolite inorganic particles, and inorganic fibers and having partition walls extending along a longitudinal direction of the honeycomb unit to define plural through holes, wherein
a content of the zeolite per apparent volume in the honeycomb unit is equal to or greater than 230 g/L but less than or equal to 270 g/L.

2. The honeycomb structure as claimed in claim 1, **characterized in that** the zeolite comprises at least one of P zeolite, Y zeolite, ferrierite, ZSM-5 zeolite, mordenite, faujasite, zeolite A, and zeolite L.

3. The honeycomb structure as claimed in claim 1 or 2, **characterized in that** the zeolite has a molar ratio of silica to alumina equal to or greater than 30 but less than or equal to 50.

4. The honeycomb structure as claimed in any one of claims 1 through 3, **characterized in that** the zeolite is ion exchanged with at least one of Fe, Cu, Ni, Co, Zn, Mn, Ti, Ag and V.

5. The honeycomb structure as claimed in any one of claims 1 through 4, **characterized in that** the zeolite further comprises secondary particles of particle diameter equal to or greater than 0.5 µm but less than or equal to 10 µm.

6. The honeycomb structure as claimed in claim 5, **characterized in that** the inorganic particles comprise at least one of alumina, silica, titania, zirconia, ceria, mullite, and precursors thereof.

7. The honeycomb structure as claimed in any one of claims 1 through 6, **characterized in that** the inorganic binder comprises solid content contained in at least one of alumina sol, silica sol, titanium sol, liquid glass, sepiolite, and attapulgite.

8. The honeycomb structure as claimed in claim 7, **characterized in that** the inorganic fibers comprise at least one of alumina, silica, silicon carbide, silica alumina, glass, potassium titanate, and aluminum borate.

9. The honeycomb structure as claimed in any one of claims 1 through 8, **characterized in that** an aperture ratio in a cross section perpendicular to the longitudinal direction in the honeycomb unit is equal to or greater than 50% but less than or equal to 65%.

10. The honeycomb structure as claimed in any one of claims 1 through 9, **characterized in that** plural of the honeycomb units are bonded to each other by interposing adhesive layers between the plural honeycomb units.

## Patentansprüche

1. Wabenstruktur, umfassend:
eine Wabeneinheit mit einer thermischen Leitfähigkeit von gleich oder größer als 0,15 W/m/K, jedoch weniger als oder gleich 0,60 W/m/K und mit einem Young-Modulus von gleich oder größer als 1,5 GPa, jedoch weniger als oder gleich 7,0 GPa, der gemäß JIS R 1605-Standard gemessen wird, wobei die Wabeneinheit Zeolith, ein anorganisches Bindemittel, anorganische Nicht-Zeolith-Teilchen und anorganische Fasern umfasst und Trennwände hat, die sich entlang einer Längsrichtung der Wabeneinheit erstrecken, um mehrere Durchgangslöcher zu definieren, wobei
der Gehalt an Zeolith pro Schüttvolumen in der Wabeneinheit gleich oder größer als 230 g/l, jedoch weniger als oder gleich 270 g/l ist.

2. Wabenstruktur, wie in Anspruch 1 beansprucht, **dadurch gekennzeichnet, dass** der Zeolith zumindest eines von β-Zeolith, Y-Zeolith, Ferrierit, ZSM-5-Zeolith, Mordenit, Faujasit, Zeolith A und Zeolith L umfasst.

3. Wabenstruktur, wie in Anspruch 1 oder 2 beansprucht, **dadurch gekennzeichnet, dass** der Zeolith ein Molverhältnis von Siliciumoxid zu Aluminiumoxid von gleich oder größer als 30, jedoch weniger als oder gleich 50 hat.

4. Wabenstruktur, wie in einem der Ansprüche 1 bis 3 beansprucht, **dadurch gekennzeichnet, dass** der Zeolith mit zumindest einem von Fe, Cu, Ni, Co, Zn, Mn, Ti, Ag und V ionenausgetauscht ist.

5. Wabenstruktur, wie in einem der Ansprüche 1 bis 4 beansprucht, **dadurch gekennzeichnet, dass** der Zeolith ferner Sekundärteilchen mit einem Teilchendurchmesser von gleich oder größer als 0,5 µm, jedoch weniger als oder gleich 10 µm umfasst.

6. Wabenstruktur, wie in Anspruch 5 beansprucht, **dadurch gekennzeichnet, dass** die anorganischen Teilchen zumindest eines von Aluminiumoxid, Siliciumoxid, Titanoxid, Zirkoniumoxid, Ceroxid, Mullit und Vorläufern davon umfasst.

7. Wabenstruktur, wie in einem der Ansprüche 1 bis 6 beansprucht, **dadurch gekennzeichnet, dass** das anorganische Bindemittel einen Feststoffgehalt umfasst, der in mindestens einem von Aluminiumoxidsol, Siliciumoxidsol, Titanoxidsol, Wasserglas, Sepiolit und Attapulgit enthalten ist.

8. Wabenstruktur, wie in Anspruch 7 beansprucht, **dadurch gekennzeichnet, dass** die anorganischen Fasern mindestens eines von Aluminiumoxid, Siliciumoxid, Siliciumcarbid, Siliciumoxid-Aluminiumoxid, Glas, Kaliumtitanat und Aluminiumborat umfassen.

9. Wabenstruktur, wie in einem der Ansprüche 1 bis 8 beansprucht, **dadurch gekennzeichnet, dass** ein Öffnungsverhältnis in einem Querschnitt senkrecht zur Längsrichtung in der Wabeneinheit gleich oder größer als 50 %, jedoch weniger als oder gleich 65 % ist.

10. Wabenstruktur, wie in einem der Ansprüche 1 bis 9 beansprucht, **dadurch gekennzeichnet, dass** mehrere der Wabeneinheiten miteinander durch Einbringen von Haftschichten zwischen mehreren Wabeneinheiten verbunden sind.

## Revendications

1. Structure en nid-d'abeilles comprenant :
une unité en nid-d'abeilles ayant une conductivité thermique supérieure ou égale à 0,15 w/m/K mais inférieure ou égale à 0,60 W/m/K et ayant un module de Young supérieur ou égal à 1,5 GPa mais inférieur ou égal à 7,0 GPa qui est mesuré selon la norme JIS R 1605, l'unité en nid-d'abeilles comprenant de la zéolite, un liant inorganique, des particules inorganiques non zéolite et des fibres inorganiques et ayant des parois de séparation s'étendant dans une direction longitudinale de l'unité en nid-d'abeilles pour définir une pluralité de trous débouchants, dans laquelle
une teneur de la zéolite par volume apparent dans l'unité en nid-d'abeilles est supérieure ou égale à 230 g/l mais inférieure ou égale à 270 g/l.

2. Structure en nid-d'abeilles selon la revendication 1,
**caractérisée en ce que** la zéolite comprend au moins un des types de zéolites suivants : parmi une zéolite bêta, une zéolite Y, une ferriérite, une zéolite ZSM-5, une mordénite, une faujasite, une zéolite A et une zéolite L.

3. Structure en nid-d'abeilles selon la revendication 1 ou 2, **caractérisée en ce que** la zéolite a un rapport molaire de la silice à l'alumine supérieur ou égal à 30 mais inférieur ou égal à 50.

4. Structure en nid d'abeille selon l'une quelconque des revendications 1 à 3, **caractérisée en ce que** la zéolite a subi un échange d'ions avec au moins un des éléments suivants : Fe, Cu, Ni, Co, Zn, Mn, Ti, Ag et V.

5. Structure en nid-d'abeilles selon l'une quelconque des revendications 1 à 4, **caractérisée en ce que** la zéolite comprend en outre des particules secondaires présentant un diamètre particulaire supérieur ou égal à 0,5 µm mais inférieur ou égal à 10 µm.

6. Structure en nid-d'abeilles selon la revendication 5, **caractérisée en ce que** les particules inorganiques comprennent au moins une des particules suivantes : de l'alumine, de la silice, du dioxyde de titane, de la zircone, de la cérine, de la mullite et des précurseurs de ceux-ci.

7. Structure en nid-d'abeilles selon l'une quelconque des revendications 1 à 6, **caractérisée en ce que** le liant inorganique comprend une teneur en solide contenue dans au moins un des éléments suivants : un sol d'alumine, un sol de silice, un sol de titane, du verre liquide, de la sépiolite et de l'attapulgite.

8. Structure en nid-d'abeilles selon la revendication 7, **caractérisée en ce que** les fibres inorganiques comprennent au moins un des éléments suivants : de l'alumine, de la silice, du carbure de silicium, de la silice-alumine, du verre, du titanate de potassium et du borate d'aluminium.

9. Structure en nid-d'abeilles selon l'une quelconque des revendications 1 à 8, **caractérisée en ce qu'**un rapport d'ouverture dans une section perpendiculaire à la direction longitudinale dans l'unité en nid-d'abeilles est supérieure ou égale à 50 % mais inférieure ou égale à 65 %.

10. Structure en nid-d'abeilles selon l'une quelconque des revendications 1 à 9, **caractérisée en ce que** les multiples unités en nid-d'abeilles sont reliées les unes aux autres par interposition de couches adhésives entre les multiples unités en nid-d'abeilles.
